# EUROPÄISCHE PATENTSCHRIFT

(11) **EP 3 500 391 B1**
(45) Veröffentlichungstag und Bekanntmachung des Hinweises auf die Patenterteilung: **18.08.2021**
(21) Anmeldenummer: 17764765.8
(22) Anmeldetag: 21.08.2017
(51) Int. Cl.: B23K 20/12, B21K 25/00, B21J 15/02, B23K 20/22, B23K 20/24, B23K 35/02, B23K 101/18

(54) **VERFAHREN ZUR VERBINDUNG WENIGSTENS ZWEIER BAUTEILLAGEN MIT PLASMASTRAHL-VORBORUNG DER DECKLAGE, VORRICHTUNG ZUM FÜGEN EINER BAUTEILVERBINDUNG, UND EINE BAUTEILVERBINDUNG**
METHOD OF CONNECTING AT LEAST TWO COMPONENT LAYERS, WITH PLASMA JET PRE-BORES IN THE COVER LAYER, DEVICE FOR JOINING A WORKPIECE ARRANGEMENT, AND WORKPIECE ARRANGEMENT
PROCÉDÉ D'ASSEMBLAGE D'AU MOINS DEUX COUCHES D'UN COMPOSANT COMPRENANT UNE ÉTAPE DE PERÇAGE D'UN AVANT-TROU DANS LA COUCHE SUPÉRIEURE AU MOYEN D'UN JET DE PLASMA, DISPOSITIF DE CONNECTION D'UN ASSEMBLAGE DE PIÈCES, ET ASSEMBLAGE ASSEMBLAGE DE PIÈCES

(30) Priorität: 19.08.2016 DE 102016115463
(43) Veröffentlichungstag der Anmeldung: 26.06.2019
(73) Patentinhaber: EJOT GmbH & Co. KG, 57319 Bad Berleburg (DE)
(72) Erfinder: REIS, Christian, 32312 Lübbecke (DE); MESCHUT, Gerson, 33659 Bielefeld (DE)
(74) Vertreter: Puschmann Borchert Kaiser Klettner Patentanwälte Partnerschaft mbB
(86) Internationale Anmeldenummer: PCT/EP2017/071013
(87) Internationale Veröffentlichungsnummer: WO 2018/033645

(56) Entgegenhaltungen:
- DE-A1- 19 634 417
- DE-A1-102012 005 203
- DE-A1-102014 019 297
- DE-C2- 19 630 518
- JP-A- H05 111 773
- JP-A- 2013 180 309
- US-A1- 2006 213 954

## Beschreibung

Die Erfindung betrifft ein Verfahren zur Verbindung wenigstens zweier Bauteillagen über ein Verbindungselement, eine Vorrichtung zum Fügen einer Bauteilverbindung, und eine Bauteilverbindung gemäß dem Oberbegriff der Ansprüche 1, 7 und 13 (siehe DE 10 2012 005 203 A1).

Um zwei plattenartige Fügepartner zu verbinden, ist es, wie beispielsweise aus der DE 196 30 518 C2 bekannt, ein Durchgangsloch zu erzeugen und die beiden Bauteillagen über ein Verbindungselement zu verbinden. Diese Art der Verbindung hat den Nachteil, dass ein Durchgangsloch nur eingeschränkte Verfahren zur Verbindungsherstellung ermöglicht, insbesondere sich auf die Verwendung von selbstfurchenden Schrauben beschränkt.

Dieser Nachteil kann eliminiert werden, wenn wenigstens zwei Bauteillagen über ein Verbindungselement verbunden werden, wobei ein Vorloch in die Decklage eingebracht wird und eine Basislage im Bereich des Vorlochs nicht vorgelocht wird. Regelmäßig wird ein eine Schulter aufweisendes Verbindungselement durch das Vorloch in der Decklage mit der Basislage verbunden, wobei das Verbindungselement die Decklage mit seiner Schulter hält. Ein ähnliches Verfahren zeigt auch die DE 10 2004 042 662 B4.

Bei Fügeverfahren mit Vorloch ergeben sich jedoch Probleme in der Vorlochbearbeitung, die mit hohem Verschleiß und Verunreinigung der Umgebung verbunden sind, wie beispielsweise Fräsen, Bohren, Schneiden oder Stanzen. Dies trifft insbesondere bei der Verarbeitung von hochfesten oder ultrahochfesten Blechen, wie beispielsweise 22MnB5, zu.

Es ist Aufgabe der Erfindung, ein besonders vorteilhaftes Verfahren und eine Vorrichtung und eine Bauteilverbindung zur Verbindung von wenigstens zwei aufeinander liegenden Bauteillagen, umfassend die Erzeugung eines Vorlochs in wenigstens einer Decklage, anzugeben.

Die Aufgabe wird durch die Merkmale der Ansprüche 1, 7 und 13 gelöst.

Die Unteransprüche stellen vorteilhafte Weiterbildungen der Erfindung dar.

In bekannter Weise wird bei einem Verfahren zur Verbindung von wenigstens zwei Bauteillagen über ein Verbindungselement, wobei eine Bauteillage wenigstens eine Decklage und wenigstens eine Basislage umfasst, ein Vorloch in die Decklage eingebracht, wobei eine Basislage im Bereich des Vorlochs nicht vorgelocht wird. In das Vorloch wird ein eine Schulter aufweisendes Verbindungselement durch das Vorloch in der Decklage eingesetzt und mit der Basislage verbunden. Das Verbindungselement hält die Decklage mit seiner Schulter fest und ist mit der Basislage form- und / oder stoff- und / oder kraftschlüssig verbunden.

Erfindungsgemäß ist vorgesehen, dass das Vorloch in Form eines Durchgangslochs ausschließlich durch einen Plasmastrahl in die wenigstens eine Decklage eingebracht wird, die über der Basislage wenigstens temporär fixiert gehalten ist. Indem die Decklage und die Basislage temporär fixiert zueinander gehalten werden, ist sichergestellt, dass das Verbindungselement an die gleiche Position in der Basislage gesetzt werden kann, an der das Vorloch erzeugt wird. So können ausreichend große Lagen allein durch ihre Gewichtskraft und Reibung relativ zueinander fixiert gehalten sein. Auch kann die Fixierung erreicht werden, indem die beiden Lagen durch verbindende Strukturen relativ bewegungsfrei zueinander gehalten werden oder diese von externen Halte- oder Niederhaltemitteln zueinander fixiert werden. Nachfolgend zur Herstellung des Vorlochs in der Decklage wird das Verbindungselement durch die Decklage, also das Vorloch in der Decklage, geführt und mit der nicht vorgelochten Basislage verbunden. Der Vorlochvorgang wird also beendet, sobald in die wenigstens eine Decklage ein Durchgangsloch eingebracht ist und die Basislage weitestgehend unbeeinträchtigt ist, jedenfalls noch kein Durchgangsloch aufweist. Die Beendigung des Vorlochvorgangs erfolgt durch Abschaltung des Plasmastrahls nach einer voreingestellten Zeitspanne, die sich unter anderem abhängig vom Abstand der Düse zum Deckblech, dem Gasdruck, der Geometrie der Düse, der Energie des Lichtbogens, der Art des Gases und der zu erzeugenden Dimension des Vorlochs im entsprechenden Werkstoff bemisst.

Die jeweiligen dem Verfahren zu Grunde liegenden Parametereinstellungen werden für jeden Einzelfall ermittelt und stehen dann als Eingangsgrößen für den Vorlochvorgang zur Verfügung.

Durch die Verwendung eines Plasmastrahls zur Erzeugung eines Vorlochs kann auch eine harte oder ultra-harte Decklage auf einer weicheren Basislage vorgelocht werden, ohne dass es zu Verformungen der Anordnung kommt. Im Rahmen der Erfindung können auch Bauteillagen verarbeitet werden, bei welchen zwischen Basislage und Decklage eine Klebstoffschicht vorgesehen ist, die zur späteren Aushärtung aufgebracht ist. Die Decklage ist insbesondere härter als die Basislage.

Gemäß einer bevorzugten Ausgestaltung des Verfahrens wird der Plasmastrahl durch einen nicht-übertragenen Lichtbogen erzeugt, wobei durch den heißen Plasmastrahl die Decklage aufgeschmolzen wird und das aufgeschmolzene Material durch den Plasmadruck verdrängt wird, und so das Vorloch erzeugt wird. Dieser Prozess wird im Folgenden als Plasmastrahlvorlochen bezeichnet und stellt einen Schmelzschneidprozess dar. Da das aufgeschmolzene und aus dem Vorloch verdrängte Material an der Oberfläche der obersten Bauteillage aushärtet und sich so stoffschlüssig mit der Decklage verbindet, verbleiben aus der Vorlochherstellung keinerlei Späne oder Butzen, die weiter behandelt werden müssten.

Insofern kann die Vorlocherzeugung mit einer Plasmastrahl-Vorlocheinheit, die ohnehin eine geringe Baugröße aufweist, ohne zusätzliche Absaug-Einrichtungen auskommen. So ist eine günstige Einbindung in Fertigungsstraßen, beispielsweise als Anbauteil an einen Fügeroboter, einfach zu realisieren.

Beim erfindungsgemäßen Plasmastrahlvorlochen brennt zwischen einer Elektrode, insbesondere einer Wolframelektrode, und der Plasmadüse ein Lichtbogen. Dieser Lichtbogen ionisiert wenigstens teilweise das Plasmagas, welches in einem Plasmastrahl auf die Decklage strömt und damit für den Energieeintrag in die Decklage sorgt, was zum selektiven Aufschmelzen der Decklage führt, wobei der Plasmastrahl ausschließlich durch den nicht-übertragenen Lichtbogen aktiviert wird. Eine Zerstörung oder Beeinträchtigung der Basislage kann so weitestgehend vermieden werden.

Bei Abschaltung des Lichtbogens kommt die Energiezufuhr durch den Plasmastrahl unmittelbar zum Erliegen und die verdrängte Schmelze erstarrt durch die flächige Wärmeableitung ebenfalls unmittelbar, wonach eine Lochkontur erhalten bleibt. Das erfindungsgemäße Verfahren eignet sich besonders gut für Materialdicken der Decklagen von 0,5 mm bis 50 mm.

Nach der Herstellung des Vorlochs in der wenigstens einen Decklage an der Verbindungsposition kann anschließend der Verbindungsvorgang durch Einbringen eines Verbindungselements in die Basislage durch das Vorloch bei unveränderter Relativlage von Basislage zu Decklage erfolgen. Da für die Verbindung eine geschlossene Basislage zur Verfügung steht, kann eine Vielzahl an Fügeverfahren Anwendung finden, wobei die Verbindung beispielsweise durch Reibschweißen, Stanznieten, Nageln, oder Schrauben, insbesondere durch Fließlochformschrauben, hergestellt werden kann.

Ferner kann das Plasmastrahlvorlochen über den bloßen Lochformvorgang hinaus durch weitere Energieeinbringung zur schnelleren Durchdringung der Basislage durch das Fügeelement beitragen.

Der Lichtbogen brennt regelmäßig innerhalb der Plasmadüse, die meist als wassergekühlte Kupferdüse ausgebildet ist, und erhitzt das Gas, welches dann als heißer Plasmastrahl aus der Plasmadüse austritt und auf die Decklage strömt.

Im Unterschied zum herkömmlichen Plasmalichtbogenschneiden, bei welchem der Schneidvorgang durch einen übertragenen Lichtbogen erzielt wird, wird eine geringere Energie in die obere Lage eingebracht, so dass ein gezieltes Vorlochen gewünschter Decklagen möglich wird ohne die darunter liegende Basislage stark zu beschädigen. Insbesondere muss auch keine elektrische Leitfähigkeit der Decklage gegeben sein, da der Energietransport ausschließlich über das Plasmagas stattfindet.

Entgegen einem mechanischen Verfahren werden durch das Plasmastrahlvorlochen keine nennenswerten Prozesskräfte erzeugt, die eine entsprechende aufwendige Dimensionierung einer Vorloch- / Verbindungsanlage notwendig machen würde.

Gemäß einer weiteren bevorzugten Ausgestaltung werden die Anlagenparameter so eingestellt, dass sich ein gewünschter Vorlochdurchmesser ergibt. Da die Dimension des Vorlochs nur abhängig von Prozessparametern ist, kann in bestimmten Grenzen eine Durchmesseranpassung bzw. Durchmessereinstellung erfolgen, ohne dass beispielsweise ein Werkzeugwechsel vorgenommen werden müsste. Dies erlaubt eine hohe Flexibilität bei der Vorlochherstellung auch für unterschiedliche Decklagen.

Bevorzugt kann zur Erzeugung des Plasmastrahls ein Hochstromverfahren eingesetzt werden. Dadurch kann eine ausreichend hohe Plasmastrahlleistung für den Vorlochvorgang bereitgestellt werden. Die Stromstärke bei der Erzeugung des Lichtbogens mittels eines Hochstromverfahrens beträgt bevorzugt zwischen 100 - 300 Ampere.

Erfindungsgemäß kann die Stromstärke für die Erzeugung des Lichtbogens über die Vorlochzeit tv variiert werden. Die Stromstärke beträgt insbesondere über eine Vorstromzeit tv eine Vorstromstärke l_{V}, über eine Hauptstromzeit t_{H} eine Hauptstromstärke l_{H}. Die Hauptstromstärke l_{H} ist dabei größer als die Vorstromstärke l_{V}. Ferner kann die Stromstärke über eine Nachstromzeit t_{N} eine Nachstromstärke l_{N} betragen, die größer als die Vorstromstärke l_{V} und kleiner als die Hauptstromstärke l_{H} ist.

Dadurch kann eine präzise Lochgestaltung erreicht werden, da insbesondere in der Nachstromzeit die in der Hauptstromzeit erzeugte Schmelze des Deckblechs durch die reduzierte Leistung des Lichtbogens, die Schmelze nur noch radial verdrängt und kein weiteres Aufschmelzen der Basislage mehr zur Folge hat.

Der Abstand der Plasmadüse von der Decklage wird so gewählt, dass zwar eine ausreichende Wärmeübertragung in die Decklage ermöglicht wird, aber ein Aufschmelzen der Basislage vermieden werden kann. Es ist vorteilhaft, eine Abstandsmessung von Plasmadüse zu Decklage durchzuführen, um eine genaue Einstellung des Abstands zu ermöglichen.

Zur weiteren Beeinflussung des Lochformvorgangs kann der Abstand der Plasmadüse zum Deckblech während des Lochformens variiert werden. Dadurch kann der Energieeintrag und die Wirkfläche des Plasmastrahls bedarfsgemäß beeinflusst werden.

Alternativ kann ein Abstandshalter vorgesehen sein. Dieser kann als Auflager und als Abstandshalter dienen und ermöglicht aufwandsarm eine präzise und zuverlässige Einstellung des Abstands der Plasmadüse zur Decklage. Als Plasmagas eignen sich grundsätzlich alle Edelgase, insbesondere Argon.

Erfindungsgemäß wird die durch den Plasmastrahl im Vorlochvorgang verdrängte Schmelze der Decklage wird bevorzugt mit Hilfe eines Formelements zu einem Wulst mit einer gewünschten Geometrie geformt, der das Vorloch umgibt.

Das Formelement kann bevorzugt so gestaltet sein, dass die Innenkante eines Holzylinders negativ ausgerundet ist, also eine Hohlkehle aufweist.

Insbesondere kann das Formelement zur verbesserten Herstellung eines Wulstes, während des Formens des Vorloches durch den Plasmastrahl rotieren.

Durch den Wulst kann ein später eingesetztes Fügeelement, das eine zum Wulst korrespondierende Unterkopfausnehmung, insbesondere eine Unterkopf-Nut aufweist, eine Formschlussverbindung zwischen Fügelement und Decklage auch in Radialrichtung herstellen. Dies führt zu einer erhöhten Querzugfestigkeit. Auch kann dadurch eine verbesserte Abdichtung der Verbindungsstelle erreicht werden.

Die Quelle zur Erzeugung des Lichtbogens erzeugt den Lichtbogen bevorzugt mit einer Gleichspannung von etwa 20 Volt, insbesondere von 18 Volt bis 25 Volt.

Das Plasma wird bevorzugt mit einer Strömungsgeschwindigkeit von etwa 20 Liter/min aus der Plasmadüse ausgegeben. Entsprechend können der Plasmadruck und der Durchmesser der Plasmadüse aufeinander abgestimmt werden, so dass eine zur Erzeugung des Vorlochs ausreichende Wärmeenergie übertragen werden kann.

Abhängig von dem zu erzeugenden Vorloch können unterschiedliche Plasmadüsen eingesetzt werden, wie dies später in Verbindung mit der Vorrichtung noch beschrieben wird.

Gemäß einem weiteren Aspekt der Erfindung wird eine Vorrichtung zum Fügen einer Bauteilverbindung umfassend wenigstens eine Decklage und wenigstens eine Basislage angegeben, wobei eine Vorlocheinheit und eine Fügeeinheit zur Verbindung der Bauteillagen über ein Fügeelement zusammenwirken.

Erfindungsgemäß ist vorgesehen, dass die Vorlocheinheit eine Plasmastrahlvorloch-Einheit umfasst. Die Plasmastrahlvorlocheinrichtung umfasst eine Plasmadüse und eine Elektrode, wobei ein Lichtbogen zwischen der Plasmadüse und der Elektrode erzeugt wird, um das Plasmagas wenigstens teilweise zu ionisieren. Die Vorlocherstellung erfolgt durch den heißen Plasmastrahl, der wie zuvor beschrieben auf die Decklage strömt.

Die Fügeverbindung wird über das Fügeelement hergestellt, welches durch das Vorloch in der wenigstens einen Decklage eine Verbindung mit der ununterbrochenen Basislage eingeht. Die Fügeeinheit kann eine Elementreibschweißeinheit, eine Nieteinheit eine Schraubeinheit oder ähnliches sein.

Erfindungsgemäß ist der Plasmastrahlvorlocheinheit ein Formelement zur Beeinflussung der durch den Vorlochvorgang entstehenden Schmelze vorgesetzt, wobei das Formelement auf das Deckblech aufgesetzt wird.

Erfindungsgemäß ist das Formelement ist konzentrisch zur Plasmadüse angeordnet und erlaubt das Durchtreten des Plasmastrahls durch das Formelement im Bereich des zu bildenden Vorlochs.

Das Formelement begrenzt die Verteilung der Schmelze wenigstens in radialer Richtung, kann aber auch eine Formgebung aufweisen, durch welche die Verteilung der Schmelze auch in axialer Richtung begrenzt wird.

Das Formelement kann einen negativ ausgerundeten Bereich aufweisen, der die Aufnahme von geschmolzenem Material der Decklage in diese Negativform ermöglicht. Durch ein so gestaltetes Formelement ergibt sich ein Wulst um das Vorloch, wonach ein solches Formelement auch als Wulstformer bezeichnet wird.

Bevorzugt weist das Formelement wenigstens eine Bohrung auf, die schräg, insbesondere orthogonal zu einer zentralen Bohrung des Formelements, durch die der Plasmastrahl geführt ist, liegt. Die wenigstens eine Bohrung dient als Entlüftungsbohrung. Dadurch wird verhindert, dass sich Plasma innerhalb des Formelements aufstaut und gegebenenfalls den Wulst ungewollt verdrängt oder zerstört.

Auf diese Weise kann das reflektierte Plasmagas auch entweichen, wenn sich der Wulst an den Wulstformer angelegt hat.

Somit kann das Formelement unmittelbar auf die Decklage aufgesetzt werden und dient damit als Abstandshalter einerseits und als Niederhalter andererseits.

Das Formelement kann bevorzugt fest oder einstellbar beabstandet zur Plasmadüse angeordnet sein. Dadurch kann bei jedem Vorlochvorgang eine einfache und zuverlässige Abstandseinstellung zwischen der Plasmadüse und der Decklage erfolgen.

Bevorzugt kann das Formelement auch gekühlt ausgebildet sein und / oder eine Beschichtung aufweisen, die einem Materialauftrag entgegenwirkt. Das Formelement kann in seiner Gestaltung und Kühlungseigenschaften so ausgelegt sein, dass eine Wärmeableitung des Plasmastrahls soweit unterbunden wird, dass noch ausreichend Wärme für den Schmelzvorgang zur Verfügung steht.

Die Plasmastrahlvorloch-Einheit kann zudem einen Antrieb zur Rotation des Formelements aufweisen. Durch die Rotation des Formelements kann die im Vorlochvorgang verdrängte Schmelze auch bei Überkopfanwendungen, wie sie beispielsweise in Fertigungsstraßen der Automobilindustrie anzutreffen sind, eine gleichmäßigere Wulstformung ermöglichen. So kann das Formelement insbesondere relativ zur Plasmadüse rotierbar ausgebildet sein.

Gemäß einer weiteren vorteilhaften Ausgestaltung kann das Formelement aus einem hochwarmfesten Metall oder einer Keramik ausgebildet sein.

Eine besonders vorteilhafte Gestaltung ergibt sich, wenn die Plasmadüse und das Formelement baueinheitlich ausgebildet sind.

In einer weiteren vorteilhaften Gestaltung der Erfindung kann die Vorrichtung einen Niederhalter aufweisen, durch den die Bauteillagen während des Vorlochvorgangs und oder / während des Fügevorgangs, mit einer Niederhaltekraft beaufschlagbar sind.

Durch den Niederhalter kann ein präziser Fügeprozess gewährleistet werden. Ferner kann Klebstoff, der sich möglicherweise zwischen der Basislage und der Decklage oder zwischen mehreren Decklagen befindet, durch die Niederhalterkraft vom zu erstellenden Vorloch weggedrängt werden. Dies hat den Vorteil, dass während des Vorlochens keine Klebstoffdämpfe entstehen und auch keine Energie für das Entfernen der Klebstoffschicht verwendet werden muss. Die Niederhalterkraft beträgt bevorzugt zwischen 0,5 und 1 kN.

Die Fügeeinheit und die Vorlocheinheit können einen gemeinsamen Niederhalter der Vorrichtung nutzen. Alternativ kann die Fügeeinheit und / oder die Vorlocheinheit einen Niederhalter aufweisen.

Die Plasmadüse kann unterschiedliche Düsenöffnungen mit unterschiedlichen Öffnungsdurchmessern und Öffnungs-Geometrien aufweisen. Durch diese wird das Lochformverhalten beeinflusst. So kann die Düsenöffnung einen zentralen kreisförmigen Ausschnitt und / oder mehrere auf einem Kreisumfang liegende kreisförmige Ausschnitte aufweisen.

Gemäß einer weiteren bevorzugten Ausgestaltung umfasst die Vorrichtung einen Parameterspeicher, in welchem die Betriebsparameter zu den entsprechenden Materialkombinationen für die Plasmastrahlvorloch-Einheit hinterlegt sind. So kann auf einfache Weise von einem Bediener abhängig von dem Material und der Dimension der zu verbindenden Lagen sowie bevorzugt auch der Vorlochdimension auf die entsprechenden Werte zurückgegriffen werden. Dadurch können zuverlässige Vorlöcher nur in die Decklage eingebracht werden. Der Bediener kann auch eine übergeordnete Steuereinheit sein.

In einer weiteren bevorzugten Ausgestaltung kann die Vorrichtung wenigstens einen Roboterarm umfassen, an den die Plasmastrahlvorloch-Einheit und/oder die Fügevorrichtung montiert sind.

Auf zuvor beschriebene Weise, kann so eine Bauteilverbindung hergestellt werden, die wenigstens eine Decklage umfasst, wobei die auf einer Basislage liegende Decklage einen, ein Vorloch umgebenden Wulst aufweist. Das Vorloch ist von dem Schaft eines Verbindungselementes durchsetzt, wobei der Schaft mit wenigstens einer Basislage verbunden ist, wobei der Kopf derart gestaltet ist, dass der das Vorloch umgebende Wulst in einer Hohlkehle unter dem Kopf aufgenommen ist. Die Decklage ist gemäß der Erfindung härter als die Basislage.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine schematische Ansicht einer Plasmastrahlvorloch-Einheit bei der Erzeugung eines Vorlochs mit einem konzentrisch angeordneten Formelement;
- Fig. 2: eine 2D-Schnittdarstellung eines in der Decklage hergestellten Vorlochs;
- Fig. 3: eine schematische Darstellung des Fügeschritts;
- Fig. 4: eine nach dem Verfahren hergestellte Verbindung;
- Fig. 5a: eine erfindungsgemäße Vorrichtung während der Herstellung des Vorlochs, und
- Fig. 5b: eine erfindungsgemäße Vorrichtung während der Herstellung der Verbindung.
- Fig. 6: Formelement mit Entlüftungsöffnung in Baueinheit mit einer Plasmadüse
- Fig. 7: Stromverlauf des Lichtbogenstroms über den Vorlochprozess.

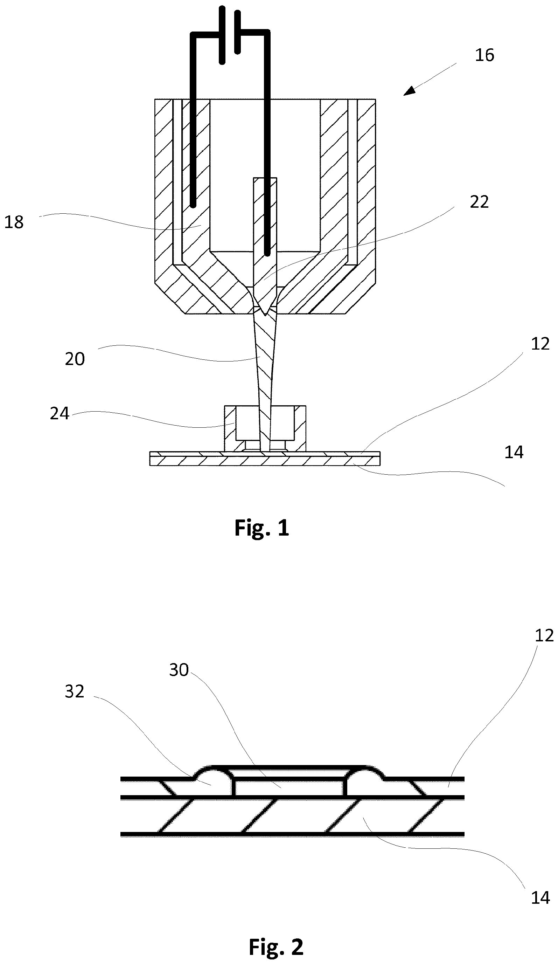

Fig. 1 zeigt einen ersten Arbeitsschritt des erfindungsgemäßen Fügeverfahrens. Gemäß diesem sollen zwei aufeinanderliegende Bauteillagen 12, 14, miteinander verbunden werden. Die Decklage 12 ist im Ausführungsbeispiel härter als die Basislage 14.

Zuerst wird mit einer Plasmastrahlvorloch-Einheit 16 ein Vorloch in die Decklage 12 eingebracht. Die Plasmastrahlvorloch-Einheit 16 umfasst eine Plasmadüse 18, in welcher ein Plasmastrahl 20 erzeugt wird, wobei ein Lichtbogen zwischen einer Wolframelektrode 22 und der Plasmadüse 18 erzeugt wird. Das durch die Plasmadüse 18 strömende Gas wird dort ionisiert und als heißer Plasmastrahl 20 auf die Decklage 12 ausgeblasen. Die Decklage 12 wird mit dem Plasmastrahl 20 im Bereich des Vorlochs aufgeschmolzen, wobei das geschmolzene Material der Decklage 12 durch den Plasmadruck aus dem Lochbereich radial verdrängt wird.

Auf die Decklage 12 ist im vorliegenden Anwendungsfall ein Formelement 24 aufgesetzt. Dieses ist als hohlzylindrische Hülse ausgebildet und begrenzt den Verlauf der Schmelze in radialer Richtung, wodurch eine ringförmige Erhebung in Form eines umlaufenden Wulstes entsteht, der durch das Formelement 24 scharf begrenzt ist.

Die Betriebsparameter der Plasmastrahlvorloch-Einheit 16 sind auf die Beschaffenheit der vorzulochenden Decklage 12 eingestellt.

Fig. 2 zeigt ein durch das erfindungsgemäße Verfahren hergestellte Vorloch 30 in der Decklage 12, welches umfänglich von einem Wulst 32 umgeben ist. Der im Bereich des Vorlochs 30 liegende Bereich der Basislage 14 ist ununterbrochen erhalten geblieben und steht so im Wesentlichen in seiner vollen Materialstärke für die Verbindungsherstellung mit einem Fügeelement zur Verfügung.

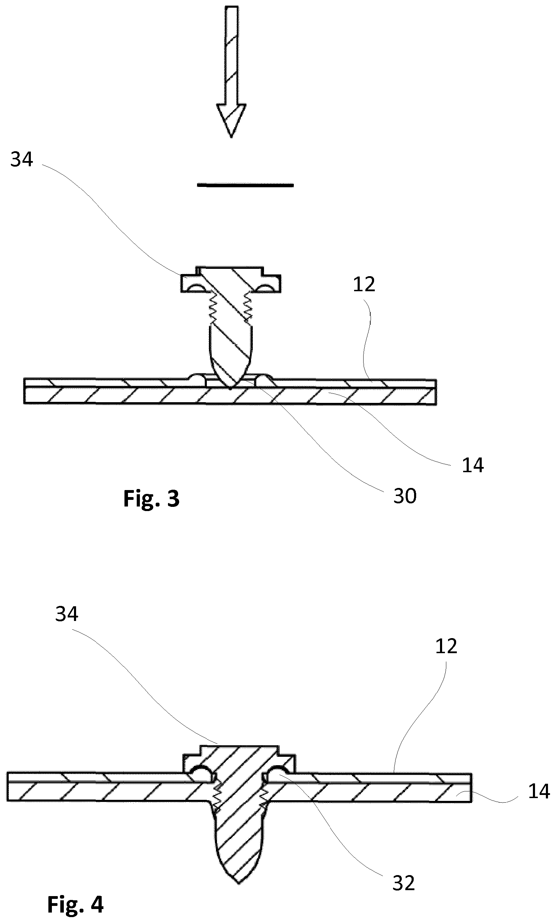

Fig 3 zeigt den Fügeschritt des erfindungsgemäßen Verfahrens, wobei eine fließlochformende Schraube 34 in das Vorloch 30 der Decklage 12 eingesetzt wird. Im Folgenden wird die fließlochformende Schraube unter Druck und Rotation in die Basislage 14 eingeschraubt, wobei diese unter Bildung eines Durchzugs und unter Erzeugung eines Gewindes eine Schraubverbindung eingeht, wie sie in der Fig. 4 dargestellt ist.

Fig. 4 zeigt die über die fließlochformende Schraube 34 verbundenen Bauteillagen 12,14, wobei die fließlochformende Schraube 34 in der Basislage 14 verschraubt ist und die Decklage 12 über seine Schulter an die Basislage 14 andrückt und in axialer Richtung formschlüssig festhält.

Die fließlochformende Schraube 34 weist in ihrer Kopfunterseite eine ringförmige Nut auf, die korrespondierend zum Wulst 32 ausgebildet ist. Auf diese Weise kann auch eine verbesserte Haltewirkung in Schraubenquerrichtung erzielt werden.

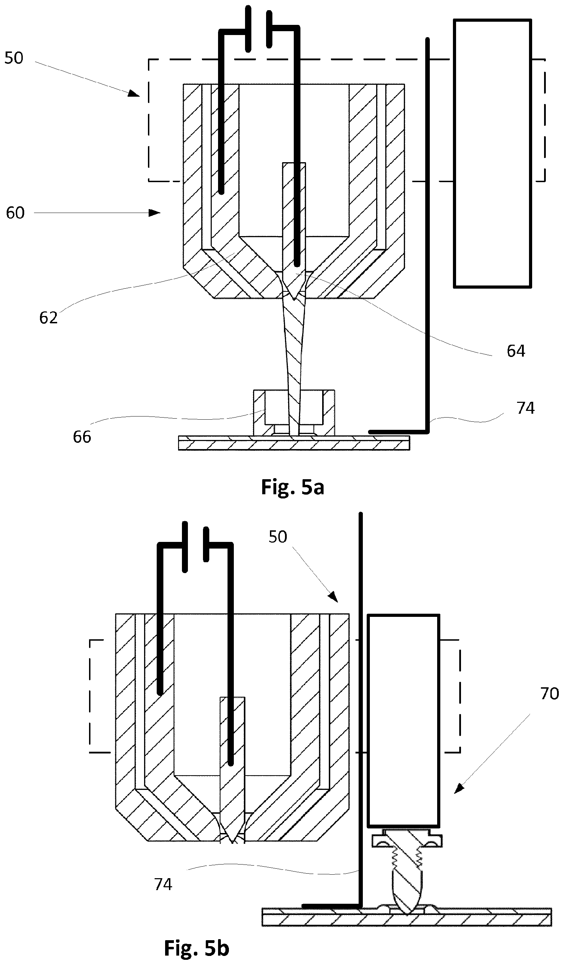

Fig. 5a zeigt eine erfindungsgemäße Vorrichtung 50 zum Fügen zweier Bauteillagen. Die Vorrichtung 50 umfasst eine Plasmastrahlvorloch-Einheit 60 und eine Fügeeinrichtung 70.

Wie bereits beschrieben umfasst die Plasmastrahlvorloch-Einheit 60 eine Plasmadüse 62 und eine Wolfram-Elektrode 64. Zwischen Wolfram-Elektrode 64 und Plasmadüse 62 wird unter Gleichspannung und Hochstrom ein Lichtbogen erzeugt. Ferner ist der Plasmadüse 62 ein Formelement 66 vorgesetzt, welches der durch den Plasmastrahl verdrängten Schmelze eine gewünschte Kontur gibt.

Ferner umfasst die erfindungsgemäße Vorrichtung 50 eine nicht gezeigte Steuereinheit, welche zuerst die Plasmastrahlvorloch-Einheit 60 an der die Verbindung erzeugende Lage positioniert, wonach nach Erzeugung des Vorlochs die Fügeeinrichtung an dieser Stelle positioniert wird, wie dies in Fig. 5b dargestellt ist.

Gemäß Fig. 5b ist die Fügeeinrichtung 70 an der Verbindungsstelle positioniert und setzt ein Fügeelement zur Verbindung mit der nicht durchbrochenen weicheren Basislage an diese Stelle.

Auf diese Weise wird gemäß der Erfindung ohne große Prozesskräfte auf schnelle Weise insbesondere eine Verbindung von Bauteillagen mit einer harten Decklage und einer weicheren Basislage mit herkömmlichen Fügeverfahren günstig hergestellt.

Wie in den Figuren 5a und 5b beispielhaft dargestellt, können die Fügeeinrichtung 70 und die Plasmastrahlvorloch-Einheit 60 einen gemeinsamen Niederhalter 78 einsetzen, der die Bauteillagen sowohl während des Vorlochvorgangs als auch während des Fügevorgangs mit einer Niederhalterkraft beaufschlagt.

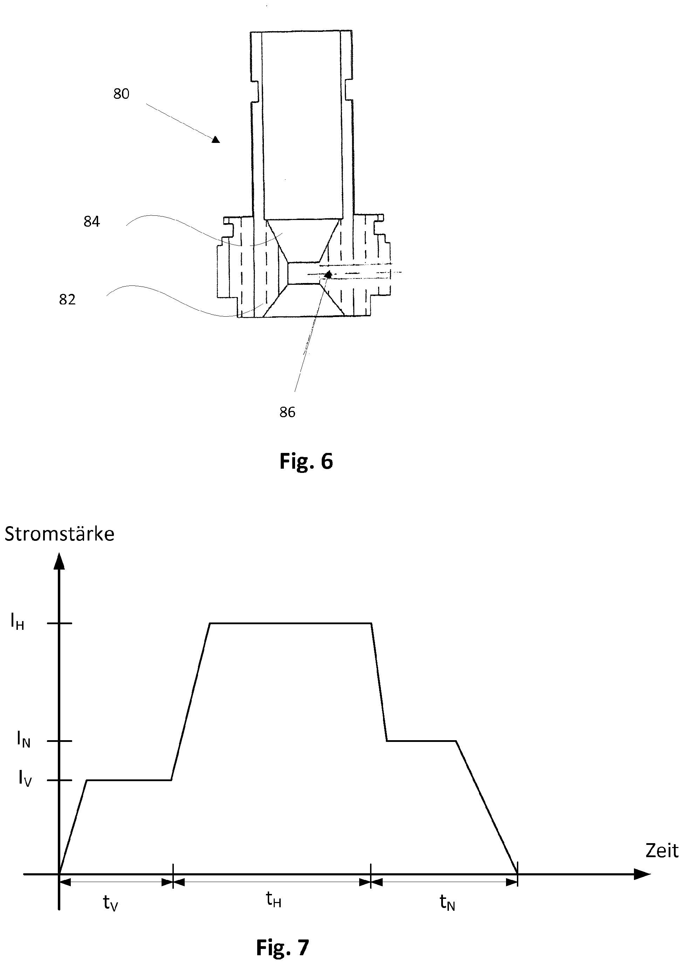

Fig. 6 zeigt eine Schnittansicht eines einstückigen Kombinationselements 80 aus einem Formelement 82 und einer Plasmadüse 84. Der obere Bereich des Kombinationselements mit seiner konischen Verjüngung bildet die Plasmadüse 84, wobei der an die Plasmadüse anschließende Teil das Formelement 82 mit einer orthogonal zur Achse des Kombinationselements 80 liegenden Entlüftungsbohrung 86 bildet.

Auf diese Weise kann das Plasmagas gebündelt durch die Plasmadüse 84 geführt werden, wobei der vom Bauteil reflektierte Gegenstrom durch die Entlüftungsbohrung 86 abgeleitet wird.

Durch die Entlüftungsbohrung 86 im Formelement 82 wird eine Stauung des Plasmagases im Formelement weitgehend vermieden, wodurch eine präzisere Ausbildung des Vorlochs und des das Vorloch umgebenden Wulsts erfolgt.

Das Formelement 82 verhindert das seitliche Austreten der Schmelze und trägt so zu einer gleichmäßigeren Formung eines Wulstes bei, der das Vorloch umgibt, das durch den Plasmastrahl in der Decklage erzeugt wird.

Fig.7 zeigt exemplarisch und qualitativ den Verlauf der Stromstärke I zur Erzeugung des Lichtbogens während des Vorlochvorgangs. Über eine Vorstromzeit tv wird der Lichtbogen durch einen Vorstrom I_{V} erzeugt. Über eine Hauptstrormzeit t_{H}, die im Wesentlichen die Zeitspanne darstellt, in der das Vorloch in die Decklage eingebracht wird, wird der Lichtbogen mit einer Hauptstromstärke I_{H} erzeugt. Diese beträgt insbesondere 200 A. Nach Erzeugung des Vorlochs in der Decklage, also nach der Hauptstromzeit, wird der Lichtbogen über eine Nachstromzeit mit einer Nachstromstärke IN erzeugt. Diese ist geringer als die Hauptstromstärke und so bemessen, dass sie nur noch eine seitliche

Verdrängung der Schmelze, aber keine weitere Lochformung in der Basislage mehr zur Folge hat. Damit kann, insbesondere in Zusammenwirkung mit einem Formelement eine relativ präzise Wulstkontur mit dem aus der Decklage aufgeschmolzenen Material hergestellt werden.

Die oben genannten Stromzeiten sind an die Materialien und die Dicke der wenigstens einen Decklage und der Basislage angepasst.

## Patentansprüche

1. Verfahren zur Verbindung wenigstens zweier Bauteillagen (12, 14) über ein Verbindungselement (34), wobei die Verbindung wenigstens eine Decklage (12) und wenigstens eine Basislage (14) umfasst, wobei ein Vorloch (30) in Form eines Durchgangslochs in die wenigstens eine Decklage (12) eingebracht wird und die wenigstens eine Basislage (14) im Bereich des Vorlochs (30) nicht vorgelocht wird, wobei ein eine Schulter aufweisendes Verbindungselement (34) durch das Vorloch (30) in der Decklage (12) mit der Basislage (14) verbunden wird, wobei das Verbindungselement (34) die Decklage (12) mit seiner Schulter hält, wobei ein Vorloch (30) nur in die wenigstens eine Decklage (12) eingebracht wird, die über der Basislage (14) wenigstens temporär fixiert gehalten ist, wobei, nachfolgend zur Herstellung des Vorlochs (30) in der Decklage (12), das Verbindungselement durch die Decklage (12) geführt wird und mit der nicht vorgelochten Basislage (14) verbunden wird, **dadurch gekennzeichnet, dass** das Vorloch (30) durch einen Plasmastrahl (20) geformt wird, wobei aus dem verdrängten Material zur Erzeugung des Vorlochs (30) während des Verdrängungsvorgangs ein konzentrischer Wulst (32) mit einem konzentrisch zu einer Plasmadüse (84) angeordneten Formelement (24, 66, 82) in radialer, insbesondere auch in axialer Richtung, begrenzt geformt wird.

2. Verfahren nach Anspruch 1, **dadurch gekennzeichnet, dass** der Plasmastrahl (20) mittels eines nicht übertragenen Lichtbogens erzeugt wird, wobei durch den heißen Plasmastrahl (20) die Decklage (12) aufgeschmolzen wird und das aufgeschmolzene Material durch den Plasmadruck verdrängt wird, wodurch das Vorloch (30) erzeugt wird.

3. Verfahren nach Anspruch 1 oder 2, **dadurch gekennzeichnet, dass** der konzentrische Wulst (32) durch das Formelement (82) hergestellt wird, welches während des Formens des Vorloches (30) durch den Plasmastrahl rotiert.

4. Verfahren nach einem der vorangehenden Ansprüche, **dadurch gekennzeichnet, dass** der Abstand der Plasmadüse zum Deckblech während des Lochformens variiert wird.

5. Verfahren nach einem der vorangehenden Ansprüche, **dadurch gekennzeichnet, dass** die Stromstärke für die Erzeugung des Lichtbogens über die Vorlochzeit t_{V} variiert wird, wobei die Stromstärke über eine Vorstromzeit t_{V} eine Vorstromstärke I_{V} beträgt, über eine Hauptstromzeit eine Hauptstromstärke I_{H} beträgt, die größer als die Vorstromstärke I_{V} ist, und über eine Nachstromzeit t_{N} eine Nachstromstärke I_{N} beträgt, die insbesondere größer als die Vorstromstärke I_{V} und kleiner als die Hauptstromstärke I_{H} ist

6. Verfahren nach einem der vorangehenden Ansprüche, **dadurch gekennzeichnet, dass** die Verbindung des Verbindungselements (34) mit der Basislage (12) durch Reibschweißen, Nageln, Reibnageln oder durch lochformendes Schrauben, insbesondere fließlochformendes Schrauben, erfolgt.

7. Vorrichtung (50) zum Fügen einer Bauteilverbindung, umfassend wenigstens eine Decklage (12) und wenigstens eine Basislage (14), wobei die Vorrichtung eine Vorlocheinheit (60) und eine Fügeeinheit (70) umfasst, die zur Verbindung der Bauteillagen (12, 14) über ein Verbindungselement (34) zusammenwirken und die Vorlocheinheit (60) ein Vorloch (30) in die wenigstens eine Decklage (12) einbringt und die Fügevorrichtung (70) ein Verbindungselement (34) durch das Vorloch (30) mit der ununterbrochenen Basislage (14) verbindet, **dadurch gekennzeichnet, dass** die Vorlocheinheit eine Plasmastrahlvorloch-Einheit (60) aufweist, die eine Plasmadüse (62) umfasst, die eine Düsenöffnung aufweist, aus welcher ein heißer Plasmastrahl austreten kann, wobei ein Formelement (24, 66, 82) konzentrisch zur Plasmadüse (84) angeordnet ist, welches insbesondere die Plasmadüse gegenüber der Decklage (12) beabstandet, wobei das Formelement (24, 66, 82) derart gestaltet ist, dass es die Verdrängung der Schmelze wenigstens in radialer, insbesondere auch in axialer Richtung, begrenzt.

8. Vorrichtung nach Anspruch 7, **dadurch gekennzeichnet, dass** die Plasmastrahlvorloch-Einheit (60) einen Plasmastrahl (20) ausschließlich durch einen nicht übertragenen Lichtbogen erzeugt.

9. Vorrichtung nach einem der Ansprüche 7 oder 9, **dadurch gekennzeichnet, dass** das Formelement (82) rotierbar ausgebildet ist.

10. Vorrichtung nach einem der Ansprüche 7 bis 9, **dadurch gekennzeichnet, dass** das Formelement (82) wenigstens eine Bohrung (86) aufweist, die schräg, insbesondere orthogonal zu einer zentralen Bohrung des Formelements (82) liegt und als Entlüftungsbohrung dient.

11. Vorrichtung nach einem der Ansprüche 7 bis 10, **dadurch gekennzeichnet, dass** die Plasmadüse (18, 62, 84) und das Formelement (24, 66, 82) baueinheitlich, insbesondere als Kombinationselement (80), ausgebildet sind.

12. Vorrichtung nach einem der Ansprüche 7 bis 11, **dadurch gekennzeichnet, dass** das Formelement (24, 66, 82) eine Beschichtung / Legierung aufweist.

13. Bauteilverbindung, umfassend wenigstens eine Decklage, wobei die obere Decklage (12) einen, ein Vorloch (30) umgebenden Wulst aufweist, wobei das Vorloch (30) von dem Schaft eines Verbindungselementes (34) durchsetzt ist, und der Schaft mit einer Basislage (14) verbunden ist, wobei das Verbindungselement einen Kopf mit einer Schulter aufweist, **dadurch gekennzeichnet, dass** der Kopf des Verbindungselements (34) derart gestaltet ist, dass der, das Vorloch (30) umgebende Wulst (32) in einer Hohlkehle an der Unterseite des Kopfes aufgenommen ist, wobei die Decklage (12) eine größere Härte als die Basislage (14) aufweist.

## Claims

1. Method of connecting at least two component layers (12, 14) to each other by means of a connecting element (34), which component connection comprises at least one cover layer (12) and at least one base layer (14), wherein a pilot hole (30) in the form of a through hole is made in said at least one cover layer (12), and said at least one base layer (14) is not pre-bored in the region of the pilot hole (30), wherein a connecting element (34) having a shoulder is connected to the base layer (14) by means of the pilot hole (30) in the cover layer (12), wherein the shoulder of the connecting element (34) is used to hold the cover layer (12) in place, wherein a pilot hole (30) is made only in said at least one cover layer (12), which is at least temporarily held fixed in place on top of the base layer (14), wherein, after the pilot hole (30) has been made in the cover layer (12), the connecting element is guided through the cover layer (12) and connected to the base layer (14) which is not pre-bored, **characterized in that** the pilot hole (30) is made using a plasma jet (20), wherein the material displaced during the formation of the pilot hole (30) is used to form a concentric bead (32) during the displacement process, for which purpose a forming element (24, 66, 82) is used that is arranged concentrically relative to a plasma nozzle (84) and limits the bead formed in a radial direction, in particular also in an axial direction.

2. Method according to claim 1, **characterized in that** the plasma jet (20) is generated by means of a non-transmitted arc, wherein the hot plasma jet (20) acts to melt the cover layer (12) and the melted material is displaced by the plasma pressure, thereby generating the pilot hole (30).

3. Method according to any one of claims 1 and 2 above, **characterized in that** the concentric bead (32) is produced by the forming element (82) which latter rotates through the plasma jet during formation of the pilot hole (30).

4. Method according to any one of the preceding claims, **characterized in that** the distance of the plasma nozzle from the cover plate is varied during hole forming.

5. Method according to any one of the preceding claims, **characterized in that** the current intensity for generating the electric arc is varied over the pre-bore time t_{V}, wherein the current intensity over a pre-arc current time t_{V} is a pre-arc current intensity I_{V}, the current intensity over a main-arc current time is a main-arc current intensity I_{H} which is higher than the pre-arc current intensity I_{V}, and the current intensity over a post-arc current time t_{N} is a post-arc current intensity I_{N} which is in particular higher than the pre-arc current intensity I_{V} and lower than the main-arc current intensity I_{H}.

6. Method according to any one of the preceding claims, **characterized in that** the connection of the connecting element (34) to the base layer (12) is made by friction welding, nailing, friction nailing or hole forming screwing, in particular flow drill screwing.

7. Device (50) for joining a component connection comprising at least one top layer (12) and at least one base layer (14), said device comprising a pre-bore unit (60) and a joining unit (70) which units cooperate to join the component layers (12, 14) by means of a connecting element (34), with the pre-bore unit (60) making a pilot hole (30) in said at least one top layer (12) and the joining unit (70) connecting a connecting element (34) to the continuous base layer (14) through the pilot hole (30), **characterized in that** the pre-bore unit includes a plasma jet pre-bore unit (60) comprising a plasma nozzle (62) having a nozzle orifice from which a hot plasma jet can exit, with a forming element (24, 66, 82) being arranged concentrically relative to said plasma nozzle (84), which element in particular acts to space the plasma nozzle from the cover layer (12), the forming element (24, 66, 82) being designed in such a way that it limits the displacement of the melt at least in a radial direction, in particular also in an axial direction.

8. Device according to claim 7, **characterized in that** the plasma jet pre-bore unit (60) produces a plasma jet (20) exclusively by means of a non-transmitted arc.

9. Device according to any one of claims 7 or 8 above, **characterized in that** the forming element (82) is designed to be rotatable.

10. Device according to any one of claims 7 to 9 above, **characterized in that** the forming element (82) has at least one bore (86) which lies obliquely, in particular orthogonally, to a central bore of the forming element (82) and serves as a vent bore.

11. Device according to any one of claims 7 to 10 above, **characterized in that** the plasma nozzle (18, 62, 84) and the forming element (24, 66, 82) are designed as an integral unit, in particular as a combination element (80).

12. Device according to any one of claims 7 to 11 above, **characterized in that** the forming element (24, 66, 82) comprises a coating/an alloy.

13. Workpiece arrangement comprising at least one top layer, wherein the top layer (12) has a bead surrounding a pilot hole (30), wherein the shaft of a connecting element (34) extends through said pilot hole (30), and said shaft is connected to a base layer (14), said connecting element having a head with a shoulder, **characterized in that** the head of the connecting element (34) is shaped in such a way that the bead (32) surrounding the pilot hole (30) is received in a fillet provided on the underside of the head, with said top layer (12) being of a greater hardness than the base layer (14).

## Revendications

1. Procédé pour assembler au moins deux couches de pièces (12, 14) par l'intermédiaire d'un élément d'assemblage (34), dans lequel l'assemblage comprend au moins une couche de recouvrement (12) et au moins une couche de base (14), dans lequel un avant-trou (30) sous forme d'un trou débouchant est ménagé dans la au moins une couche de recouvrement (12) et la au moins une couche de base (14) n'est pas prépercée dans la zone de l'avant-trou (30), dans lequel un élément d'assemblage (34) présentant un épaulement est assemblé à la couche de base (14) par l'avant-trou (30) dans la couche de recouvrement (12), dans lequel l'élément d'assemblage (34) maintient la couche de recouvrement (12) avec son épaulement, dans lequel un avant-trou (30) n'est ménagé que dans la au moins une couche de recouvrement (12), qui est maintenue fixée au moins temporairement par l'intermédiaire de la couche de base (14), dans lequel, à la suite de la fabrication de l'avant-trou (30) dans la couche de recouvrement (12), l'élément d'assemblage est guidé à travers la couche de recouvrement (12) et est assemblé à la couche de base (14) non prépercée,
**caractérisé en ce que**
l'avant-trou (30) est formé par un jet de plasma (20), dans lequel un bourrelet concentrique (32) est formé de manière délimitée dans la direction radiale, en particulier également dans la direction axiale, avec un élément de formage (24, 66, 82) disposé de manière concentrique par rapport à une buse à plasma (84) à partir du matériau refoulé pour la production de l'avant-trou (30) pendant le processus de refoulement.

2. Procédé selon la revendication 1, **caractérisé en ce que** le jet de plasma (20) est produit au moyen d'un arc électrique non transmis, dans lequel la couche de recouvrement (12) est fondue par le jet de plasma (20) chaud et le matériau fondu est refoulé par la pression de plasma, ce qui a pour effet que l'avant-trou (30) est produit.

3. Procédé selon la revendication 1 ou 2, **caractérisé en ce que** le bourrelet concentrique (32) est fabriqué par l'élément de formage (82), lequel tourne pendant le formage de l'avant-trou (30) par le jet de plasma.

4. Procédé selon l'une quelconque des revendications précédentes, **caractérisé en ce que** la distance de la buse à plasma par rapport à la tôle de recouvrement est modifiée pendant le formage de trou.

5. Procédé selon l'une quelconque des revendications précédentes, **caractérisé en ce que** l'intensité du courant pour la production de l'arc électrique est modifiée pendant le temps d'avant-trou tᵥ, dans lequel l'intensité du courant atteint une intensité de pré-courant lᵥ pendant un temps de pré-courant tᵥ, atteint une intensité de courant principal l_{H} qui est supérieure à l'intensité de pré-courant lᵥ pendant un temps de courant principal, et atteint une intensité de post-courant l_{N} qui est en particulier supérieure à l'intensité de pré-courant lᵥ et inférieure à l'intensité de courant principal l_{H} pendant un temps de post-courant t_{N}.

6. Procédé selon l'une quelconque des revendications précédentes, **caractérisé en ce que** l'assemblage de l'élément d'assemblage (34) à la couche de base (12) s'effectue par soudage par friction, clouage, clouage par friction ou par vissage formateur de trou, en particulier vissage formateur de trou de fluage.

7. Dispositif (50) pour joindre un assemblage de pièces, comprenant au moins une couche de recouvrement (12) et au moins une couche de base (14), dans lequel le dispositif comprend une unité d'avant-trou (60) et une unité de jonction (70), qui coopèrent pour l'assemblage des couches de pièces (12, 14) par l'intermédiaire d'un élément d'assemblage (34) et l'unité d'avant-trou (60) ménage un avant-trou (30) dans la au moins une couche de recouvrement (12) et le dispositif de jonction (70) relie un élément d'assemblage (34) à la couche de base (14) ininterrompue par l'avant-trou (30),
**caractérisé en ce que**
l'unité d'avant-trou présente une unité d'avant-trou à jet de plasma (60), qui comprend une buse à plasma (62), qui présente une ouverture de buse de laquelle un jet de plasma chaud peut sortir,
dans lequel
un élément de formage (24, 66, 82) est disposé de manière concentrique par rapport à la buse à plasma (84), lequel éloigne en particulier la buse à plasma par rapport à la couche de recouvrement (12), dans lequel l'élément de formage (24, 66, 82) est conçu de telle sorte qu'il limite le refoulement de la masse fondue au moins dans la direction radiale, en particulier également dans la direction axiale.

8. Dispositif selon la revendication 7, **caractérisé en ce que** l'unité d'avant-trou à jet de plasma (60) produit un jet de plasma (20) exclusivement par un arc électrique non transmis.

9. Dispositif selon l'une quelconque des revendications 7 ou 8, **caractérisé en ce que** l'élément de formage (82) est réalisé de manière rotative.

10. Dispositif selon l'une quelconque des revendications 7 à 9, **caractérisé en ce que** l'élément de formage (82) présente au moins un trou (86), qui se situe de manière inclinée, en particulier perpendiculairement à un trou central de l'élément de formage (82) et sert de trou de ventilation.

11. Dispositif selon l'une quelconque des revendications 7 à 10, **caractérisé en ce que** la buse à plasma (18, 62, 84) et l'élément de formage (24, 66, 82) sont réalisés de façon modulaire, en particulier sous la forme d'un élément combiné (80).

12. Dispositif selon l'une quelconque des revendications 7 à 11, **caractérisé en ce que** l'élément de formage (24, 66, 82) présente un revêtement/alliage.

13. Assemblage de pièces, comprenant au moins une couche de recouvrement, dans lequel la couche de recouvrement (12) supérieure présente un bourrelet entourant un avant-trou (30), dans lequel l'avant-trou (30) est traversé par la tige d'un élément d'assemblage (34), et la tige est assemblée à une couche de base (14), dans lequel l'élément d'assemblage présente une tête avec un épaulement,
**caractérisé en ce que**
la tête de l'élément d'assemblage (34) est conçue de telle sorte que le bourrelet (32) entourant l'avant-trou (30) est reçu dans une gorge sur la face inférieure de la tête, dans lequel
la couche de recouvrement (12) présente une dureté plus dure que la couche de base (14).
